# EUROPÄISCHE PATENTANMELDUNG

(11) **EP 1 189 394 A2**
(43) Veröffentlichungstag der Anmeldung: **20.03.2002**
(21) Anmeldenummer: 01121404.6
(22) Anmeldetag: 06.09.2001
(51) Int. Cl.: H04L 12/56, H04Q 11/04, H04L 29/06

(54) **Verfahren und Vorrichtung für die Reduzierung von Adressen für ATM-bzw. IP-Netze**

(30) Priorität: 19.09.2000 DE 10046321
(71) Anmelder: SIEMENS AKTIENGESELLSCHAFT, 80333 München (DE)
(72) Erfinder: Mariggis, Athanase, 81379 München (DE)

(57) **Zusammenfassung**

Verfahren und Vorrichtung (10) zum Ersatz langer Adressen der in einem Vermittlungsknoten eines ATM- oder IP-Netzes ankommenden Datenpakete durch diesen Adressen zugeordnete reduzierte Adressen, wobei die Adressen in einem Speicher (12) sortiert nach langen Adressen abgelegt sind und darin eine Suche auf Basis der jeweils bekannten Anzahl und Lage nutzbarer Speicherplätze gemäß dem folgenden Schema durchgeführt wird:
a) in einem ersten Vergleichsschritt wird die zu reduzierende Adresse mit dem Wert in einem nach einer Regel festgelegten ersten Speicherplatz verglichen und
b) abhängig vom Ergebnis dieses Vergleichsschrittes wird die weitere Suche auf den Teilbereich des Speichers oberhalb oder unterhalb dieses ersten Speicherplatzes eingeschränkt und
in diesem eingeschränkten Teilbereich analog zu den beiden obigen Schritten a) und b) weitergeführt, bis nach Maßgabe eines Abbruchkriteriums die Vergleichsschritte beendet werden.

## Beschreibung

Die Erfindung betrifft ein Verfahren und eine Vorrichtung zum Minimieren der Adreßlänge der in einem Vermittlungsknoten eines ATM- oder IP-Netzes ankommenden Datenpakete.

Im Internet und in ATM-Netzwerken werden Informationen vom Sender zu einem oder mehreren Empfängern übertragen, in dem die zu übertragenden Informationen in einzelne Datenpakete gepackt werden, wobei jedem Paket Daten zur Spezifizierung des Übertragungsweges hinzugefügt werden. Der Informationsteil der Datenpakete wird allgemein als Nutzinformationsfeld bezeichnet, während der, die Zustellinformation betreffende Teil der Datenpakete als Zellkopf bezeichnet wird.

Die Übertragung der Datenpakete im Internet erfolgt auf Basis des Internetprotokolls verbindungslos. Der Zellenkopf eines jeden Datenpaketes enthält deshalb als Zustellparameter die Adresse des Absenders sowie die Adresse des Empfängers. In Version 4 des Internetprotokolls ist jede dieser Adressen 32 Bit lang, in Version 6 des Internetprotokolls sind 128 Bit für jede dieser Adressen vorgesehen, so daß damit ungefähr 3x10³⁸ Adressen bereitgestellt werden können. Rein rechnerisch stehen mit dem Internetprotokoll Version 6 ca. 7x10²³ Adressen pro m² Erdoberfläche zur Verfügung, also etwas mehr als ein Mol Moleküle faßt.

Im Gegensatz zum Internetprotokoll erfolgt die Zustellung der Datenpakete in ATM-Netzwerken verbindungsorientiert, d.h., die Zustellung der Datenpakete erfolgt erst nach dem Aufbau eines Übertragungskanals zwischen Sender und Empfänger. Die Zustellparameter im Zellenkopf der Datenpakete sind daher anders als beim Internetprotokoll nicht die Adressen von Absender und Empfänger sondern die Parameter der aufgebauten Verbindung wie der virtuelle Pfad und der darin ausgebildete virtuelle Kanal. Dieses Verbindungsparameterpaar wird als VPI/VCI (virtual path identifier/virtual channel identifier) bezeichnet. Die Länge dieses Parameters kann bis zu 28 Bit betragen, womit in etwa 268 Mio Verbindungen bedient werden können. Generell werden in den Vermittlungseinrichtungen beider Netze Tabellen geführt, in denen Verbindungsdaten wie z.B. Daten bezüglich der Leitweglenkung oder der Zellenratenüberwachung abgelegt sind und ggf. dynamisch geändert werden. Zu einem gegebenen Zeitpunkt kann jedoch nur eine beschränkte Anzahl von Verbindungen eingerichtet sein, die mit einer Größenordnung von etwa 2¹³ Verbindungen deutlich kleiner ist als die von den Übertragungsprotokollen vorgesehenen Größenordnungen.

Um die verbindungsbezogenen Daten den Tabellen der Verbindungseinrichtungen entnehmen zu können, müssen die den Tabellen zugehörigen Speicherzellen in entsprechender Weise adressiert werden. Dies ist jedoch mit 2²⁸ oder mehr Adressen wie sie das Internetprotokoll vorsieht nicht praktikabel. Eine Reihe von Verfahren, die die lange Zustellinformation bzw. Adresse der Datenpakete in eine kürzere mit etwa 13 Bit umsetzen, haben sich daher durchgesetzt. Die Aktualisierung der Verbindungsdaten erfolgt mit diesen reduzierten Adressen, so daß die Tabellen der Vermittlungssysteme verwaltbar werden. Da die Datenrate einer Übertragung nicht von der Umsetzung der Adresse verzögert werden darf, steht für den Vorgang der Adreßreduktion nur eine relativ kurze Zeit von z.B. 2,8 µsec bezogen auf eine Übertragungsrate von 150 Mbit/sec, wie sie für ATM-Netze üblich ist, zur Verfügung. Daher haben sich für die Durchführung der Umsetzung der Adressen ursprünglich inhaltsadressierbare Speicher (CAM, content addressable memory) durchgesetzt. In diesen inhaltsadressierbaren Speichern sind die langen Adressen zusammen mit den ihnen zugehörigen kurzen Adressen abgelegt. Eine eingehende lange Adresse wird mit den Daten im CAM verglichen und bei Auffinden eines passenden Eintrags wird die reduzierte Adresse ausgegeben.

Technisch werden diese inhaltsadressierbaren Speicher als anwendungsspezifische integrierte Schaltkreise (ASIC, application specific integrated circuit) ausgeführt und sind daher aufwendig und teuer in der Herstellung und auch inflexibel in Bezug auf mögliche Erweiterung der Hard- und Softwarekomponenten. Diese Nachteile werden gemäß der Offenlegungsschrift DE 196 29 765 A1 vermieden indem der inhaltsadressierbare Speicher in einen Logikanteil und einen Speicheranteil aufgesplittet wird, wobei die Vergleichsschritte im Logikanteil durchgeführt werden und die Suche nach einem passenden Eintrag im Speicheranteil unter Verwendung eines sequentiellen Suchverfahrens in einem binären Suchbaum durchgeführt wird. Jeder Knoten des Suchbaums enthält dabei die Werte für den Vergleich mit der eingehenden langen Adresse und Zeigerinformationen, die festlegen, an welchem Knoten des Suchbaums, bzw. an welchem Speicherplatz im Speichersystem die Suche fortgeführt wird falls die zu vergleichende Adresse größer bzw. kleiner als der Wert des aktuellen Knotens des Suchbaums war. Von Vorteil ist hierbei die Realisierung des Verfahrens in einer Logikeinrichtung, die größere Flexibilität gegen künftige Änderungen garantiert und daß die Schaltung mit kostengünstigen Standardbauelementen realisiert werden kann. Von Nachteil ist jedoch die relative Komplexität des Suchverfahrens und daß zusätzlicher Speicherplatz für die erforderlichen Zeiger benötigt wird.

Es ist daher Aufgabe der vorliegenden Erfindung, ein Verfahren und eine Vorrichtung zur Adreßreduktion in einem Vermittlungsknoten eines ATM- oder IP-Netzes bereitzustellen, die bei minimal notwendigem Speicherplatz ohne großen Aufwand einen schnellen und effizienten Ersatz langer Adressen durch ihnen zugeordnete reduzierte Adressen ermöglichen.

Diese Aufgabe wird gelöst durch ein Verfahren und eine Vorrichtung zum Ersatz langer Adressen der in einem Vermittlungsknoten eines ATM- oder IP-Netzes ankommenden Datenpakete durch diesen Adressen zugeordnete reduzierte Adressen, wobei die Adressen in einem Speicher sortiert nach langen Adressen abgelegt sind und darin eine Suche auf Basis der jeweils bekannten Anzahl und Lage nutzbarer Speicherplätze gemäß dem folgenden Schema durchgeführt wird: in einem ersten Vergleichsschritt wird die zu reduzierende Adresse mit dem Wert in einem nach einer Regel festgelegten ersten Speicherplatz verglichen und abhängig vom Ergebnis dieses Vergleichsschrittes wird die weitere Suche auf den Teilbereich des Speichers oberhalb oder unterhalb dieses ersten Speicherplatzes eingeschränkt und in diesem eingeschränkten Teilbereich analog zu den beiden obigen Schritten weitergeführt bis nach Maßgabe eines Abbruchkriteriums die Vergleichsschritte beendet werden.

Von besonderem Vorteil ist dabei, daß die vorliegende Erfindung keine Zeiger benötigt, weil die Tiefe des Speichers bekannt ist und die Schritte der Zeigeroperationen durch einfache mathematische Grundoperationen auf der Basis einer Division mit dem Wert 2 berechnet werden können. Die Auswertelogik wird hierbei stark vereinfacht und zusätzlich werden weniger Daten vom Speicher benötigt, womit schmalere Busbreiten verwendet werden können. Ein weiterer Vorteil des vorgestellten Verfahrens ist die geringe Anzahl benötigter Taktzyklen für das Auffinden eines passenden Wertes, so daß eine Verzögerung des Nutzinformationsteils bis zum Abschluß der Zellkopfbearbeitung eines Datenpaketes überflüssig ist.

In einer vorteilhaften Weiterbildung der vorliegenden Erfindung werden nicht verwendete Speicherplätze vollständig mit dem größten oder vollständig mit dem niedrigsten Adreßwert als Platzhalter aufgefüllt.

In einer weiteren vorteilhaften Ausbildung der Erfindung werden 2ⁿ⁻¹, wobei n eine beliebige natürliche Zahl darstellt, zusammenhängende Speicherplätze für die Ablage der Adressen im Speicher genutzt und als Regel wird der Speicherplatz in der Mitte des benutzten Speichers bzw. in der Mitte des durch einen vorangegangene Vergleichsschritt definierten Teilbereichs davon für die Vergleichsschritte festgelegt. Vorteilhaft wird die Erfindung weiterhin dadurch ausgebildet, daß das Abbruchkriterium eine festgestellte Gleichheit oder eine vorgegebene Anzahl von Vergleichsschritten ist.

Vorteilhaft kann eine dynamische Anpaßbarkeit der gespeicherten Daten durch eine Schattenspeichereinrichtung erreicht werden, deren Inhalt ein Abbild der ersten Speichereinheit ist, und worin die Aktualisierung der Daten von der Logikeinrichtung so vorgenommen wird, daß eine Freigabe eines Speicherplatzes durch Verschieben aller Speicherinhalte ab und einschließlich dieses Speicherplatzes um eine Position in Richtung der Position der redundant belegten Speicherplätze erfolgt und ein Entfernen eines Inhalts eines Speicherplatzes über ein Verschieben aller Speicherinhalte, ausgehend von der äußeren Speicherplatzposition der redundant belegten Speicherplätze bis eine Position vor den zu entfernenden Wert, um eine Position weg von den redundant belegten Speicherplätzen erfolgt und wobei der äußere Speicherplatz seinen ursprünglichen Wert beibehält. Die erste Speichereinrichtung übernimmt nach Abschluß der Aktualisierung die Werte der Schattenspeichereinrichtung.

Im folgenden wird die Erfindung anhand von Ausführungsbeispielen näher beschrieben, wobei auf folgende Figuren verwiesen wird, von denen
Fig. 1 die vorgeschlagene Vorrichtung zur Reduktion der ATM- oder IP-Adressen zeigt, und
Fig. 2 den Prozeß der Bearbeitung der Datenpakete in einem Vermittlungsknoten soweit er die vorliegende Erfindung betrifft, darstellt, und
Fig. 3 schematisch das erfindungsgemäße Suchverfahren anhand von Speichereinrichtungen mit 8 (a), 16 (b) und 32 (c) Speicherplätzen veranschaulicht, und
Fig. 4 deutlich macht, wie eine neue Adresse in den Schattenspeicher eingefügt (Fig. 4a), bzw. wie eine Adresse aus dem Schattenspeicher entfernt wird (Fig. 4b).

Einander entsprechende Objekte besitzen in den verschiedenen Figuren gleiche Bezugszeichen.

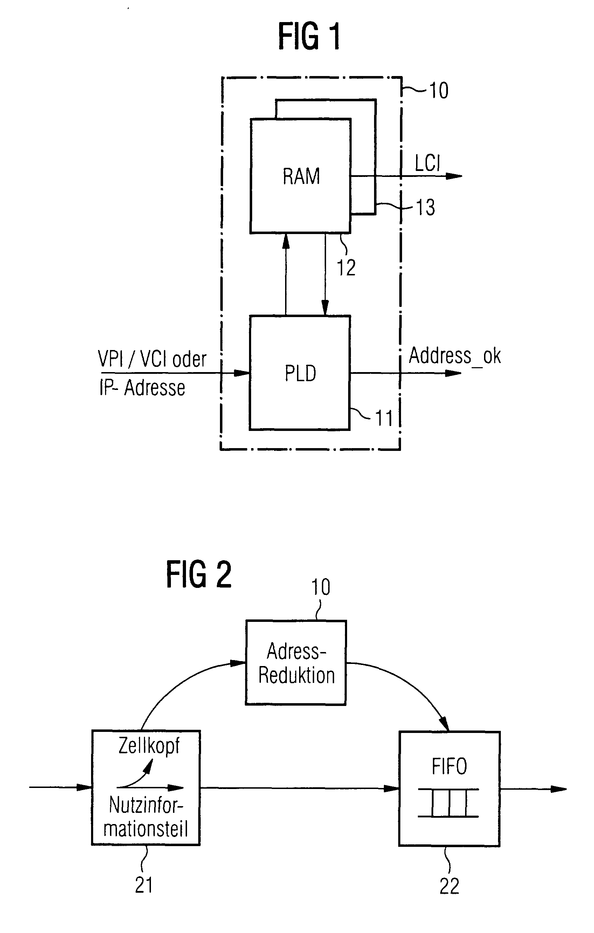

Das Blockschaltbild der Figur 1 gibt einen Überblick über die Funktionsschritte des erfindungsgemäßen Gerätes 10 zur Reduzierung von Adressen im Vermittlungsknoten eines ATM- oder IP-Netzes. In einer ersten Speichereinrichtung 12 sind die langen Adressen zusammen mit den ihnen zugeordneten gültigen reduzierten Adressen sortiert nach langen Adressen abgelegt. Vorteilhaft ist dabei die Sortierung aufsteigend oder absteigend nach langen Adressen vorzunehmen. Sind weniger Adressen abzulegen als Speicherplätze in dieser ersten Speichereinheit vorhanden sind, so werden bei aufsteigend sortierten Adressen die verbleibenden Speicherplätze mit dem höchsten Adreßwert aufgefüllt. Sind die Adressen in der Speichereinheit absteigend sortiert abgelegt, so werden die verbleibenden Speicherplätze entsprechend mit dem niedrigsten Adreßwert ausgefüllt (Für die weitere Beschreibung wird, so nicht anders angegeben eine Sortierung der Daten aufsteigend nach langen Adressen unterstellt).

Die dem Datenpaket entnommene Adreßinformation wird der Logikeinrichtung 11 zugeführt. Gemäß dem in dieser Logikeinrichtung abgelegten Regelwert vergleicht diese Einrichtung die Adreßinformation nun mit den in der ersten Speichereinrichtung abgelegten Daten. Als Resultat dieses Vergleichs sind prinzipiell drei Fälle möglich.
1. In der ersten Speichereinrichtung ist kein passender Eintrag vorhanden.
2. In der ersten Speichereinrichtung 12 befindet sich genau ein passender Eintrag.
3. In der ersten Speichereinrichtung befinden sich mehr als ein passender Eintrag.

Der erste Fall deutet auf einen Übertragungsfehler hin, und wird mit dem Signal "not match" am Ausgang der Logikeinrichtung angezeigt. Im zweiten Fall kann der eingegangenen Adreßinformation eindeutig eine reduzierte Adresse für die Weitervermittlung des Datenpaketes zugeordnet werden. Dies wird mit dem Signal "address_ok" am Ausgang der Logikeinrichtung angezeigt und die reduzierte Adresse (LCI, logical channel identifier) wird von der nachfolgenden Schaltung übernommen. Fall 3 wird entweder durch eine fehlerhaft aufgebaute Tabelle in der ersten Speichereinheit oder aber durch die Verwendung von Platzhaltern wie in einer besonderen Ausführungsform der vorliegenden Erfindung verursacht. Daher ist es vorteilhaft, die Suche beim Auffinden des ersten passenden Eintrags abzubrechen und die festgestellte Gleichheit mit dem Signal "address_ok" anzuzeigen.

Das erfindungsgemäße Suchverfahren beruht auf einer bekannten Anzahl von Speicherplätzen in der ersten Speichereinheit. Begonnen wird die Suche an einem Speicherplatz, der nach einer feststehenden Regel festgelegt wird. Wird keine Gleichheit der Werte festgestellt, so wird abhängig von der Art der festgestellten Ungleichheit der weitere Verlauf der Suche auf den Speicherbereich oberhalb oder unterhalb dieses Speicherplatzes eingeschränkt. Diese beiden Suchoperationen, Vergleich der Werte und folgende Einschränkung des weiteren Suchbereichs, werden nun so lange wiederholt, bis ein passender Eintrag gefunden wird oder aber die vorgegebene Anzahl von maximal durchzuführenden Vergleichsschritten erreicht ist.

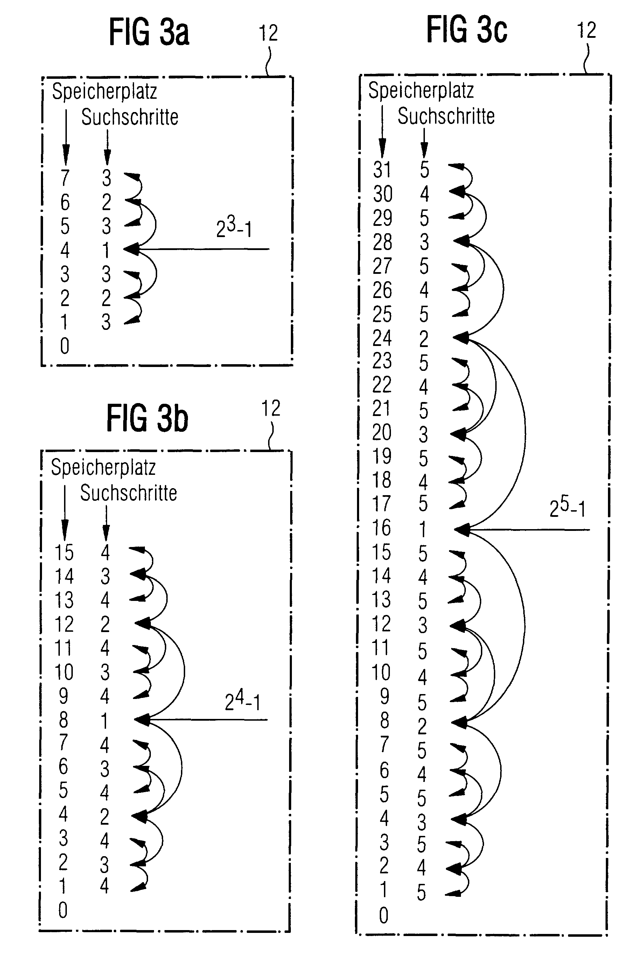

Vorteilhaft werden nach obiger Regel die Vergleichsschritte mit dem Speicherplatz in der Mitte des genutzten Teils der Speichereinheit begonnen. Dabei ist es von besonderem Vorteil, 2ⁿ Speicherplätze mit den gewünschten Adreßinformationen zu belegen, wobei n eine natürliche Zahl darstellt und die Anzahl der belegten Speicherplätze idealerweise die verfügbare Speicherkapazität soweit als möglich ausschöpft. In der Fig. 3 ist das vorgeschlagene Suchverfahren nach dieser Regel anhand von drei verschiedenen Speichern mit einer Tiefe von jeweils 8, 16 und 32 Speicherplätzen sinnbildlich dargestellt. Verwendet werden jeweils alle Speicherplätze ausgenommen der Speicherplatz mit dem Zeiger 0. Begonnen wird die Suche an dem Speicherplatz in der Mitte des mit Adressen belegten Bereichs. Dies ist im Falle des kleinsten dargestellten Speichers der Speicherplatz mit dem Zeiger 4 oder auch kurz 4. Speicherplatz genannt, im Falle des Speichers mittlerer Größe der Speicherplatz Nr. 8 und im dritten Speicher der Speicherplatz Nr. 16. Sind die in den Speichern abgelegten Adreßinformationen gemäß einer bevorzugten Ausführungsform der vorliegenden Erfindung aufsteigend nach langen Adressen sortiert und ist der im ersten Speicherplatz vorgefundene Wert kleiner als der aufzufindende Vergleichswert, so wird der nächste Vergleichsschritt in der Mitte der Speicherhälfte oberhalb dieses Speicherplatzes vorgenommen. Im Falle des Speichers der Tiefe von 8 Speicherplätzen wird daher der zweite Vergleichsschritt am Speicherplatz Nr. 6, im Speicher der Tiefe 16 am Speicherplatz Nr. 12 und im Speicher der Tiefe 32 am Speicherplatz Nr. 24 vorgenommen. Angenommen der Wert an diesem Speicherplatz ist nun kleiner als der zu vergleichende Wert, so wird die Suche in der Mitte der unteren Hälfte des zuletzt ausgewählten Speicherteilsegments fortgeführt. Im Falle des Speichers mit der Tiefe von 8 Speicherplätzen ist dies die Speicherplatznummer 5. Wird Übereinstimmung der beiden Werte festgestellt, so wird die zugehörige reduzierte Adresse bzw. der LCI-Wert an die nachfolgende Schaltung weitergegeben und die Logikeinrichtung signalisiert an ihren Ausgang "address_ok". Stimmen die beiden Werte jedoch nicht miteinander überein, so signalisiert die Logikeinrichtung an ihrem Ausgang ein "not match", da die maximale Anzahl von drei Suchschritten für diese Speichertiefe erreicht ist. Generell sind in einem Speicher mit 2ⁿ⁻¹ abgelegten Adreßinformationen maximal n Suchschritte erforderlich. In einem Speicher der Tiefe von 8k, in dem 2¹³ Adreßinformationen abgelegt werden können, sind daher nie mehr als 13 Suchschritte zum Auffinden der gesuchten Adreßinformation notwendig. Da die Tiefe des Speichers bekannt ist, müssen mit den Adreßinformationen keine zusätzlichen Zeigerinformationen zur Festlegung des nächsten für die Suche zu verwendenden Speicherplatzes mitgeführt werden. Die Speicherplatznummer eines folgenden Vergleichsschrittes ergibt sich aus der Speicherplatznummer des gerade getätigten Vergleichsschrittes durch eine einfache Arithmetik auf der Basis einer Division mit 2.

Fig. 2 zeigt den Prozeß der Adreßbearbeitung eines Datenpaketes in einem Vermittlungsknoten eines ATM- bzw. IP-Netzes. dem eingehenden Datenpaket wird in einer Einrichtung 21 der Zellkopf entnommen und der erfindungsgemäßen Vorrichtung zur Reduzierung von Adressen 10 zugeführt. Darin wird die lange Adresse durch die ihr zugeordnete gültige reduzierte Adresse ersetzt und der neue Zellkopf im nachgeordneten FIFO-Speicher 22 an den Nutzinformationsteil des Datenpakets angefügt. Beim Stand der Technik in ATM-Systemen werden die Nutzdaten so lange verzögert, bis die Verarbeitung des Zellkopfs abgeschlossen ist. Wird die Verarbeitung des Zellkopfs gemäß der vorliegenden Erfindung vorgenommen, so ist die dafür benötigte Zeit viel kürzer als die Zeit die für die Zwischenspeicherung des Nutzinformationsteils benötigt wird; der Datendurchsatz im erfindungsgemäßen Vermittlungsknoten wird dadurch erhöht.

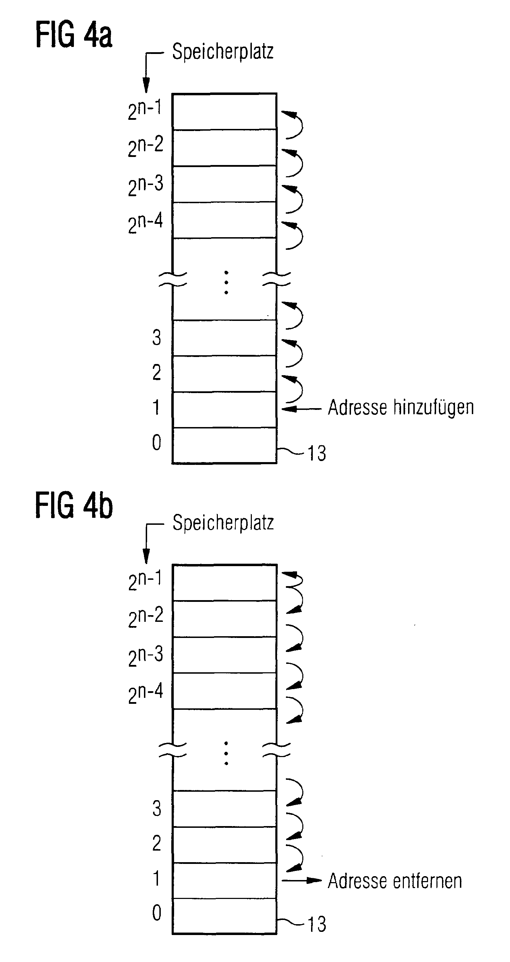

Eine vorteilhafte Weiterbildung der Erfindung ist in Fig. 4 dargestellt. Ein Abbild der Daten der ersten Speichereinheit wird parallel in einer Schattenspeichereinrichtung 13 gehalten, so daß darin Änderungen der abgelegten Adreßinformationen vorgenommen werden können ohne den Prozeß der Adreßreduktion zu unterbrechen. Die Einträge in der Schattenspeichereinrichtung werden aktualisiert, indem entweder eine neue Adresse hinzugefügt wird, oder eine der vorhandenen Adressen entfernt wird.

Fig. 4a illustriert die Vorgänge für das Hinzufügen einer neuen Adresse für die bevorzugte Ausführung der Erfindung mit den Adreßinformationen in den Speichereinrichtungen aufsteigend nach langen Adressen sortiert. Das Einfügen einer neuen Adresse an einen bestimmten Speicherplatz des Schattenspeichers erfolgt, indem alle Speicherinhalte ab dieser Adresse aufwärts um eine Position in den nächsthöheren Speicherplatz verschoben werden. Dabei geht der Wert in der höchsten Speicherplatzposition verloren. Dies ist jedoch ohne Bedeutung, da der Speicherplatz mit dem Wert der höchsten Adresse als Platzhalter belegt war. Nach dem Verschieben der Adreßinformationen in der angegebenen Weise wird an dem freigegebenen Speicherplatz die neue Adreßinformation abgelegt.

Fig. 4b zeigt den umgekehrten Vorgang zum Entfernen einer Adreßinformation aus dem Schattenspeicher. Hierzu werden alle Speicherinhalte der Speicherplätze oberhalb des betroffenen Speicherplatzes um eine Position nach unten verschoben wobei der Eintrag des obersten Speicherplatzes beibehalten bzw. auf sich selbst kopiert wird.

Sind die Einträge in den Speichereinrichtungen absteigend nach langen Adressen sortiert, so erfolgen das Hinzufügen einer neuen Adresse bzw. das Entfernen einer Adresse analog hierzu in umgekehrter Weise; statt, beim Einfügen einer neuen Adresse die Inhalte der Speicherplätze um eine Position in Richtung der höheren Speicherplätze zu verschieben, werden die Speicherinhalte nun um eine Position hin zu den niedrigeren Speicherplätzen verschoben. In analoger Weise wird in diesem Fall eine Adresse entfernt, indem die Inhalte aller Speicherplätze unterhalb des entsprechenden Speicherplatzes um eine Position nach oben verschoben werden. Zusätzlich wird der Eintrag des untersten Speicherplatzes auf sich selbst kopiert. Nach Abschluß der Aktualisierung werden der Schattenspeicher und die erste Speichereinrichtung miteinander vertauscht, so daß der Schattenspeicher die Funktion der ersten Speichereinheit erhält und umgekehrt die erste Speichereinheit auf die Funktion des Schattenspeichers umgeschaltet wird. Ein Abgleichen des Inhalts des Schattenspeichers mit dem Inhalt der ersten Speichereinheit würde einen Taktzyklus pro abzugleichenden Speicherplatz benötigen. Mit dem beschriebenen Umschalten beider Speichereinheiten erfolgt dagegen die Bereitstellung der aktuellen Werte in einem Taktzyklus.

## Patentansprüche

1. Verfahren zum Ersatz langer Adressen der in einem Vermittlungsknoten eines ATM- oder IP-Netzes ankommenden Datenpakete durch diesen Adressen zugeordnete reduzierte Adressen, wobei die Adressen in einem Speicher (12) sortiert nach langen Adressen abgelegt sind und darin eine Suche auf Basis der jeweils bekannten Anzahl und Lage nutzbarer Speicherplätze gemäß dem folgenden Schema durchgeführt wird:
a) in einem ersten Vergleichsschritt wird die zu reduzierende Adresse mit dem Wert in einem nach einer Regel festgelegten ersten Speicherplatz verglichen und
b) abhängig vom Ergebnis dieses Vergleichsschrittes wird die weitere Suche auf den Teilbereich des Speichers oberhalb oder unterhalb dieses ersten Speicherplatzes eingeschränkt und in diesem eingeschränkten Teilbereich analog zu den beiden obigen Schritten a) und b) weitergeführt, bis nach Maßgabe eines Abbruchkriteriums die Vergleichsschritte beendet werden.

2. Verfahren nach Anspruch 1,
**dadurch gekennzeichnet,**
**daß** überschüssige Speicherplätze vollständig mit dem größten oder vollständig mit dem niedrigsten Adreßwert als Platzhalter aufgefüllt werden.

3. Verfahren nach Anspruch 2,
**dadurch gekennzeichnet,**
**daß** eine Anzahl von 2ⁿ-1, wobei n eine beliebige natürliche Zahl darstellt, zusammenhängender Speicherplätze für die Ablage der Adressen genutzt wird und als Regel der Speicherplatz in der Mitte des nutzbaren Speichers oder eines Teilbereichs davon für die Vergleichsschritte festgelegt wird.

4. Verfahren nach einem der Ansprüche 1 bis 3
**dadurch gekennzeichnet,**
**daß** das Abbruchkriterium eine festgestellte Gleichheit oder vorgegebene Anzahl von Vergleichsschritten ist.

5. Verfahren nach einem der Ansprüche 1 bis 4,
**dadurch gekennzeichnet,**
**daß** die Aktualisierung der Daten des Speichers in einem Schattenspeicher (13), dessen Inhalt ein Abbild des ersten Speichers (12) ist, vorgenommen wird, wobei
die Freigabe eines Speicherplatzes durch Verschieben aller Speicherinhalte ab und einschließlich dieses Speicherplatzes um eine Position in Richtung der Position der Platzhalter erreicht wird und
das Entfernen des Inhalts eines Speicherplatzes durch Verschieben aller Speicherinhalte, ausgehend von der äußeren Speicherplatzposition der Platzhalter bis eine Position vor dem zu entfernenden Wert, um eine Position weg von den Platzhaltern erreicht wird, wobei der äußere Speicherplatz seinen ursprünglichen Wert beibehält, und
der erste Speicher nach Abschluß der Aktualisierung die Werte des Schattenspeichers übernimmt.

6. Vorrichtung zur Adreßreduktion in Vermittlungsknoten eines ATM- oder IP-Netzes zum Ersetzen langer Adressen ankommender Datenpakete durch jenen zugeordnete reduzierte Adressen, aufweisend eine Speichereinrichtung (12) mit darin nach langen Adressen sortiert abgelegten Adressen und eine Logikeinrichtung (11), die eine Suche auf Basis der jeweils bekannten Anzahl und Lage nutzbarer Speicherplätze in der Speichereinrichtung gemäß dem folgenden Schema durchführt:
a) Vergleich der zu reduzierenden Adresse mit dem Wert in einem nach einer Regel festgelegten ersten Speicherplatz und
b) Einschränkung der weiteren Suche in Abhängigkeit vom Ergebnis dieser Vergleichsschritte auf den Teilbereich des Speichers oberhalb oder unterhalb dieses ersten Speicherplatzes und Weiterführung der Suche in diesem eingeschränkten Teilbereich analog zu den beiden obigen Schritten a) und b), bis nach Maßgabe eines Abbruchkriteriums die Vergleichsschritte beendet werden.

7. Vorrichtung zur Adreßreduktion (10) in Vermittlungsknoten eines ATM- oder IP-Netzes nach Anspruch 6
**dadurch gekennzeichnet,**
**daß** überschüssige Speicherplätze vollständig mit dem größten oder vollständig mit dem niedrigsten Adreßwert als Platzhalter aufgefüllt sind.

8. Vorrichtung zur Adreßreduktion (10) in Vermittlungsknoten eines ATM- oder IP-Netzes nach Anspruch 7
**dadurch gekennzeichnet,**
**daß** 2ⁿ-1, wobei n eine beliebige natürliche Zahl darstellt, zusammenhängende Speicherplätze in der Speichereinheit (12) für die Ablage der Adressen genutzt sind und die Logikeinrichtung (11) als Regel den Speicherplatz in der Mitte des nutzbaren Bereichs der Speichereinheit (12) oder eines Teilbereichs davon für die Vergleichsschritte festgelegt.

9. Vorrichtung zur Adreßreduktion (10) in Vermittlungsknoten eines ATM- oder IP-Netzes nach einem der Ansprüche 6 bis 8
**dadurch gekennzeichnet,**
**daß** die Logikeinrichtung (11) als Abbruchkriterium eine festgestellte Gleichheit oder vorgegebene Anzahl von Vergleichsschritten verwendet.

10. Vorrichtung zur Adreßreduktion (10) in Vermittlungsknoten eines ATM- oder IP-Netzes nach einem der Ansprüche 6 bis 9
**dadurch gekennzeichnet,**
**daß** es eine Schattenspeichereinrichtung (13) aufweist, deren Inhalt ein Abbild der ersten Speichereinheit (12) ist, und worin die Aktualisierung der Daten von der Logikeinrichtung (11) nach folgenden Maßgaben vorgenommen wird:
die Freigabe eines Speicherplatzes erfolgt durch Verschieben aller Speicherinhalte ab und einschließlich dieses Speicherplatzes um eine Position in Richtung der Position der Platzhalter
das Entfernen des Inhalts eines Speicherplatzes erfolgt durch Verschieben aller Speicherinhalte, ausgehend von der äußeren Speicherplatzposition der Platzhalter bis eine Position vor den zu entfernenden Wert um eine Position weg von den Platzhaltern, wobei der äußere Speicherplatz seinen ursprünglichen Wert beibehält und die erste Speichereinrichtung (12) wird nach Abschluß der Aktualisierung der Werte in der Schattenspeichereinrichtung (13) mit dieser vertauscht.
